# EUROPEAN PATENT APPLICATION

(11) **EP 2 009 558 A1**
(43) Date of publication of application: **31.12.2008**
(21) Application number: 07290785.0
(22) Date of filing: 25.06.2007
(51) Int. Cl.: G06F 17/30

(54) **Method and system for providing navigable search results**

(71) Applicant: France Télécom, 75015 Paris (FR)
(72) Inventor: Blyth, Steven, London W4 5XS (FR); Alon, Saiful, 75015 Paris (FR)
(74) Representative: McCann, Heather Alison

(57) **Abstract**

The present invention relates to a method and system for providing navigable search results and provides a method of processing search results generated in respect of a search query when the search query is formulated via an input device that is associated with a terminal. The terminal has a display and is configured with access to a storage system holding a plurality of sets of data records. Embodiments of the invention include the steps of:
receiving input indicative of a character in a search query to as to formulate an initial search query;
reviewing each of the sets of data records to identify records matching the initial search query;
for a set of data having a record matching the initial search query, creating a selectable object in the display, each selectable object having a display mode associated therewith, said display mode displaying a search results listing comprising matching records in the display; and
appending the matched record to a search results listing corresponding thereto,

in which, in the event that a plurality of sets of data has a record matching the initial search query, the display mode corresponding to a selected selectable object displays the or each unselected selectable object in addition to the search listing corresponding to said selected selectable object.

## Description

### Field of the Invention

The present invention relates to a method and system for providing navigable search results, and is particularly, but not exclusively, suited to providing means for navigating through search results on a mobile device.

### Background of the Invention

Handheld mobile devices, such as cellular telephones and personal digital assistants (PDAs), are becoming increasingly powerful both in terms of processing power and the ability to provide access to data. The usefulness of these enhancements is often limited, however, by an inability of mobile devices to display data effectively due to the small size of the display, and to mobile device's limited memory resources relative to laptop and desktop computers. Moreover devices such as wireless telephones typically have limitations associated with the data input interface due to the restricted size of the input interface and limited number of input keys. As a result, several alphanumeric characters are linked to a single input key such that a particular action by the user (e. g. pressing a key) corresponds to selection of more than one alphanumeric character. On a standard telephone keypad, selection of the letter "b" for example, involves the user pressing the "2" key twice, and selection of the letter "f" involves pressing the "3" key three times. Accordingly, to enter a query for "joe bloggs", the user would ordinarily need to enter the following string of key presses: 5666330022555666447777, which map to letters as follows: 5 - j; 666 - o; 33 - e; 00 - space; 22 - b; 555 -1; 666 - o; 4 - g; 4 - g; 7777 - s. This is extremely cumbersome in terms of number of key presses required, and the problem is exacerbated when the name contains two identical letters adjacent to one another (in this example "bloggs") because the user has to wait a certain period of time between successive key presses.

International patent application having publication number WO2004/111871 describes a solution to the data input problem, in which the mobile device includes a software module that identifies the complete set of alphanumeric characters corresponding to a given key when the key is pressed. The entire set of characters is then used to formulate a plurality of search strings, each based on one of the set of characters. This alleviates the need to press any key more than once when wishing to add a character to a search string. Of course, because the system creates search strings using all of the characters, the system generates several irrelevant potential search strings; however, by performing the search in real time (in response to the addition of a given character to the search string), the user is presented with all possible results that match the search strings, and this can enable the user to identify the search result of interest without having to complete the entire search string. Whilst initially the number of potential results might be extremely large, the number of matches to the combination of characters continually decreases as the user presses more keys. Thus this approach represents an elegant balance between the competing constraints of managing the amount of input needed from the user, and having to review an unmanageable volume of potentially relevant search results.

As described in W02004/111871, a device typically stores a plurality of sets of data: for example contacts, messages, music, among others; in addition the device can be used to access data available on public networks such as the Internet. It will be appreciated that one or more of these sets of data might contain a record that matches the search strings, and this then calls into question how the records from these different data sets should best be presented to the user. The solution provided in WO2004/111871 is to present results from different sets of data on different parts of the display, and the particular example given describes positioning results from a first set of data at the top of a display and those from a second set of data at the bottom of the display. WO2004/111871 also describes assigning a set of data as the "first set of data" (and thus presented at the top of the display) in dependence on which applications the user has been accessing on the phone.

Whilst this is an improvement over simply presenting search results in the order in which they have been retrieved, the user will inevitably have to scroll down through the display area in order to view search results relating to different sets of data because mobile devices have limited display areas.

There is thus a need for an improved system and method for handling the output of search queries.

### Summary of the Invention

In accordance with a first aspect of the present invention, there is provided a method and terminal set out in the appended claims.

Since each selectable object, or tab, presented in the display is associated with one set (or category) of data, selection of a given tab results in display of only the results from the corresponding category. Thus in contrast WO2004/11187, the user can navigate between category by simply selecting on a tab corresponding to the set of data of interest rather than having to scroll down the screen to find results from a different category.

The display can be arranged to optimise the number of search results listed for any given set of data, for example by positioning the selectable objects at the top of the display area in the form of a row of tabs, and listing search results below the row of tabs; as the user clicks through tabs along the row, this results in display of the search results within the different categories.

Most conveniently, as a search query is modified, the display can be modified so as to only display tabs corresponding to categories that have returned search results generating a match with the query. The modification can involve removal of tabs previously rendered on the display - in relation to an earlier part of the query - or it can involve clearing the display containing results corresponding to an earlier part of the query and adding tabs to an effectively blank display. The latter arrangement, in which the tabs are cleared each time the search query is modified, is particularly well suited to instances in which the user deletes part of the previously submitted query and/or inserts characters between characters of an existing query, since in this case all or part of the previously returned search results will no longer be relevant to the modified query. The former case, in which tabs are removed from the display, is particularly well suited to instances in which modification to a search query only involves adding characters to the search query, since the number of search results can only decrease. In either case a clear benefit of this feature of the invention is that the user can immediately identify - from the remaining tabs - the categories having potentially matching results.

Further features and advantages of the invention will become apparent from the following description of preferred embodiments of the invention, given by way of example only, which is made with reference to the accompanying drawings.

### Brief Description of the Drawings

Figure 1 is a schematic block diagram showing an environment within which embodiments of the invention operate;
Figure 2 is a schematic block diagram showing components of one of the terminals shown in Figure 1 when configured according to an embodiment of the invention;
Figures 3a - 3b are schematic diagrams showing output of embodiments of the invention, as a user modifies a query;
Figure 4 is a schematic flow diagram showing steps involved in processing a query composed as shown in Figures 3a - 3c;
Figure 5 is a schematic flow diagram showing steps involved in processing the results of the querying process shown in Figure 4; and
Figures 6a - 6c are schematic diagrams showing alternative output of embodiments of the invention.

### Detailed Description of the Invention

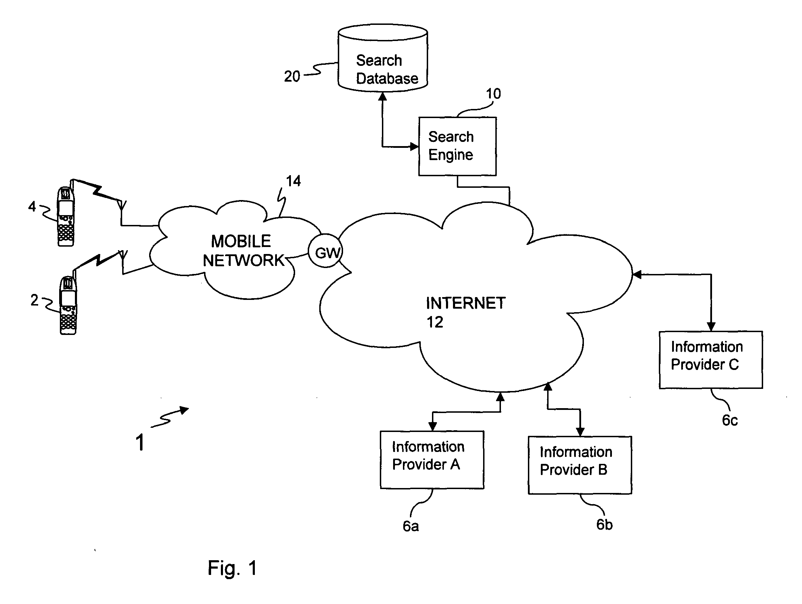

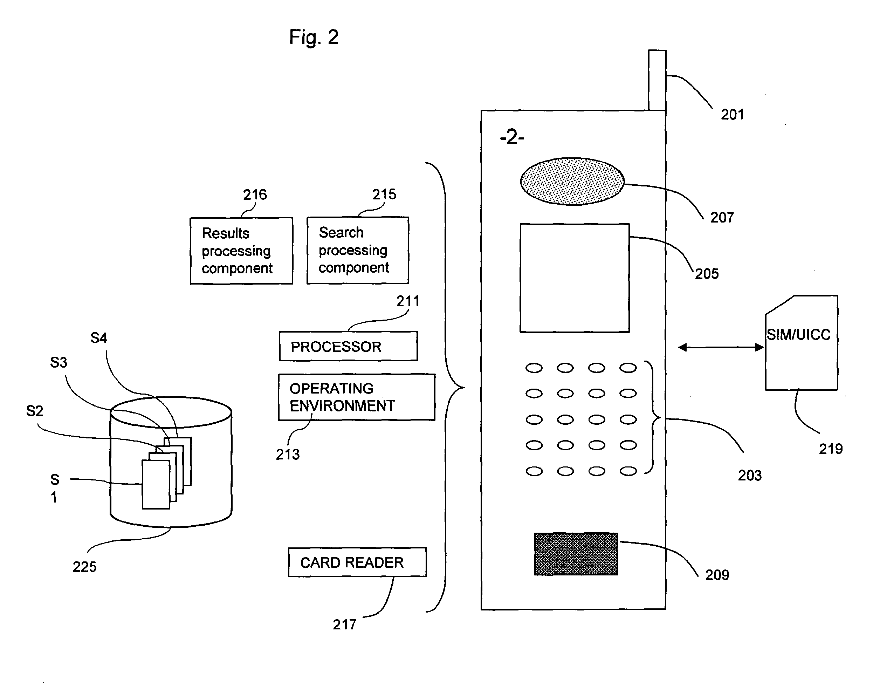

As described above, embodiments of the present invention are generally concerned with improving access to results from search queries, in particular when the query is received and/or performed on devices such as mobile terminals. The nature of the process for processing the search results and the criteria relating thereto is described in detail below, but first a description of the infrastructure needed to support some embodiments of the invention will be presented with reference to Figures 1 and 2: Figure 1 shows an example of a distributed information system 1 and Figure 2 shows a terminal configured to operate within the distributed information system 1. The current embodiment relates to servicing of search requests - i.e. requests for content corresponding to a keywords entered in part or in full - and concentrates on searching locally stored data that are arranged in categories; however, from a full reading of the specification it will be appreciated that the invention can also be applied to searching data accessible from a public network and also for searching for data within a software application.

In the current embodiment mobile terminals 2, 4 are adapted to communicate with the various information providers 6a, 6b, 6c via mobile network 14 and an appropriate gateway GW, as shown; the terminals 2, 4 can be mobile telephones or PDAs, lap top computers and the like, and the mobile network 14 can comprise a licensed network portion (such as is provided by cellular networks using e.g. Global System for Mobile Communications (GSM) technology, Wideband Code Division Multiplex Access (WCDMA); Code Division Multiplex Access (CDMA), WiMax) and/or unlicensed network portions (such as is provided by Wireless LANs and Bluetooth technologies). The gateway GW can be a GPRS support node (GGSN) forming part of the mobile network 14.

Turning to Figure 2, the mobile terminal 2 has an antenna 201 for communicating across the network 14 in known manner and provides a user interface, having a keypad 203 and display screen 205, a loudspeaker 207 and a microphone 209; alternatively the user interface could comprise components such as touch screens, touch pads and the like. The handset also comprises a processor 211, an operating environment 213 and various standard software applications such as a browser adapted to locate, and access data from, web sites corresponding to the or each information provider 6a, 6b, 6c and to submit requests for data from the search engine 10. The mobile terminal 2 is also provided with a smart card reader 217 of known type for interacting with a removable or non-removable SIM or a UICC 219, which may be provided with a processor, operating environment, and software applications. The mobile terminal 2 holds a plurality of sets of data S1, S2, S3, S4 each corresponding to a particular type of data. For example, S1 might be a set of contacts data; S2 might be a set of messages (e.g. Inbox, Sent Items etc.); S3 might be a set of emails, and S4 might be a set of music files (e.g. MP3 files).

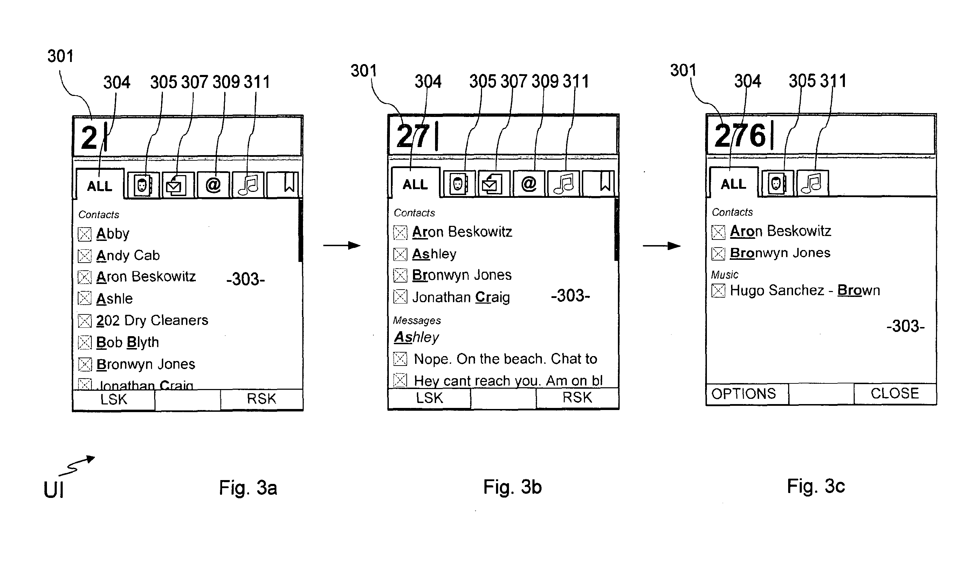

In order to process data according to embodiments of the invention, the mobile terminal 2 includes a search processing software component 215 and a results processing component 216, both of which can be embedded within a browser or can be separate applications running on the mobile terminal 2. The operating environment 213 is arranged to invoke the search processing component 215 in response to receipt of input via the keypad 203 provided the input does not start with a "0" or "1", since these are reserved for placing telephone calls. Assuming the input to be other than a 0 or a 1, the search processing component 215 invokes a user interface, which, as shown in Figure 3a, comprises an editable region 301 within which numbers corresponding to the currently selected key are displayed.

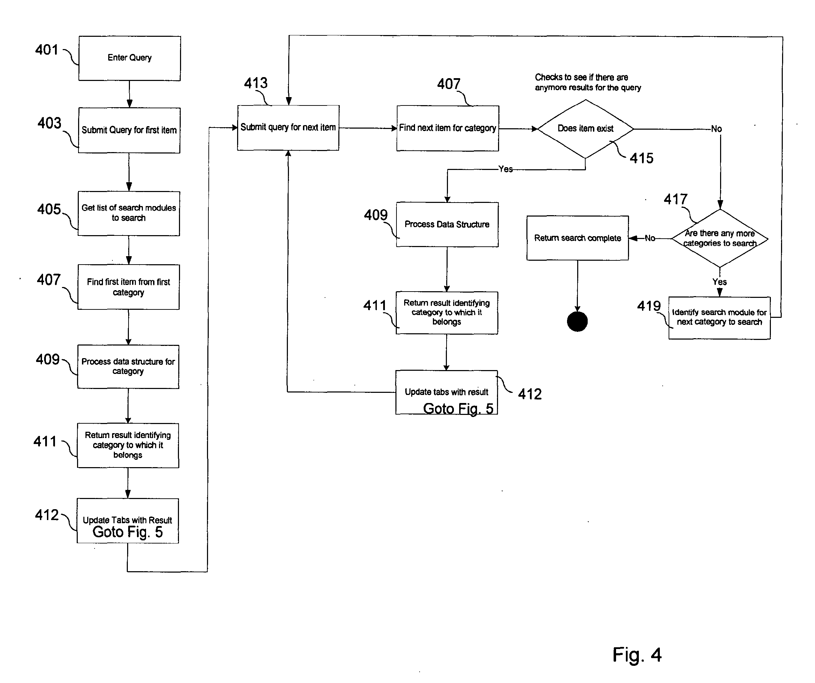

Turning now to Figure 4, the processing steps associated with embodiments of the invention will now be described. At step 401, the search processing component 215 analyses the keyed input in order to formulate a search query; assuming the user to have pressed key "2", the search processing component 215 firstly identifies all other characters linked to key "2", which, in conventional mobile telephones, is a set of alphanumeric characters {2, a, b, c}. The query submitted by the search processing component 215 at step 403 to the storage system 225 is any record starting with a first of this set of characters, so in this example {2}. At step 405 the search processing component 215 identifies the sets of data that are to be searched; this can be specified in a search specification file, which, for example, can list all or selected sets of data S1 ... S4 accessible from the storage system 225, together with remotely accessible search engine 10. In this embodiment it is assumed that the search processing component 215 is configured to search all of the locally accessible sets of data, that is to say all of the sets of data S1 ... S4 accessible from the storage system 225.

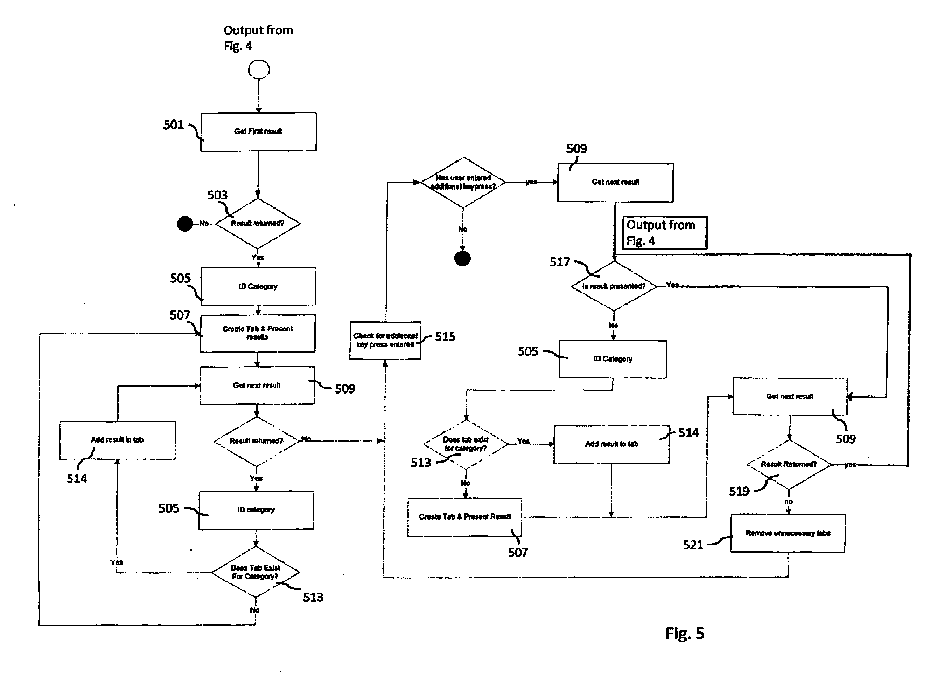

Next, at step 407, the search processing component 215 queries the first set S1 within the storage system 225; assuming the first data set S1 to have a record matching the query, the search processing component 215 generates, as output, a first record satisfying the query together with any ancillary information that has been stored in conjunction with the record. This ancillary information includes the name of the data set, i.e. contacts (steps 409, 411); this is then used by the results processing component 216 to arrange the search result for display to the user. More specifically, referring back to Figure 3a and referring forward to Figure 5, the search result is appended to a search listing associated with the data set S1, or category (step 505). A selectable tab is then created for the category (step 507), and a common display area 303 updated so that a search listing specific to a given category can be reviewed upon selection of the tab. In the present example, since set S1 corresponds to contacts, this first contact returned at step 411 is added to a search results listing associated with this category "contacts" and a contacts tab 305 is created. In addition the search results are added to a search results listing associated with the category "All" and an "All" tab 304 is created.

Having updated the common display area 303 with the first result, the results processing component 216 triggers the search processing component 215 to submit a query for a next match in set S1 with {2} (step 413); assuming there to be a second record matching the query (as indicated by the "Yes" output of decision step 415), steps 409 and 411 progress as for the first result, triggering updates to the common display area 303. As can be seen from step 509 of Figure 5, the results processing component 216 processes each subsequently received result within a given category as for the first result of that category (steps 505, 507), and appends the result to the search listing, updating the common display area 303 accordingly. This process is repeated for all records within the first category S1.

Once the entire set of records for the current data set S1 has been searched (as indicated by the "No" output of decision step 415), the search processing component 215 moves onto the next set of data records (step 419), in this case set S2, which stores "messages", and repeats steps 413, 407 - 411 described above. This involves invoking the results processing component 216, which, as can be seen from Figure 5, continuously cycles through step 509 for any given search result, filtering the result by category (step 505) in order to append the result to the correct search listing and update the common display area 303 with tab 307 at step 507. As can be seen from step 513, when a result is returned from an as yet unseen category, this causes the results processing component 216 to create a new tab corresponding thereto and update the common display area 303 accordingly. As described above, the "All" tab 304 displays every result returned from the search results processing component 215. In one arrangement the results are appended to the "All" tab 304 by adding them to the end of the existing search listing, while in other arrangements the search results are arranged in alphabetical order in relation to the search results on the existing search listing; the skilled person will appreciate that other arrangements are possible, such as ordering the search listings in accordance with how frequently the user has been observed to access a given data record within a data set.

Steps 407 - 419 are repeated for the remaining data sets (in this example S3 and S4), and the whole process (steps 403 - 419) is then repeated for the next character in the set of alphanumerical characters {2, a, b, c}, in this example for character {a}. As will be appreciated, this cycle continues until the data sets S1 ... S4 have been searched in respect of each character in the set.

Once all of the data sets S1 ... S4 have been searched for each character in the set {2, a, b, c}, the search processing component 215 is effectively idle, pending input from the user. This input can be in the form of selection of a tab, causing the results processing component 216 to modify the common display area 303 to display the search listing in the selected tab, or it can be in the form of another key input within the editable region 301, as shown in Figure 3b. Typically the steps described above progress more quickly than the time it takes for the user to supplement the query with the pressing of another key; in any event as will be appreciated from Figure 5, the tabs are added to the common display region 303 as the search results from a given data set S 1 are processed. As a result there is negligible delay between the user composing the query and the user being presented with some results.

When a second keypad is pressed the search processing component 215 is triggered to formulate a query comprising a combination of sets of alphanumeric characters. In the example shown the number pressed is the number 7, which maps to the alphanumeric set {7, p, q, r, s}); accordingly at step 401 the search processing component 215 creates a query comprising a first character from the first set of alphanumeric characters {2, a, b, c} and a first character from the second set of alphanumeric characters {7, p, q, r, s} - i.e. 27 - and submits the query to a first set of data S 1 holding contacts. The search steps 403 - 411 progress exactly as described above, but the results processing component 216 steps through a slightly different sequence to that processed in relation to search results from a single keypad input. More specifically, as can be seen from Figure 5, each result received from the search processing component 215 is evaluated by the results processing component 216 to determine whether or not the result is already on a given search listing associated with the common display area 303; if so the results processing component 216 effectively does nothing and waits for the next result (step 509, shown on the right hand side of the Figure). If, however, the result is not already on a given search listing (which may happen when a record is added to a given data set while the query is progressing or if the user modifies the query so as to remove a character previously included in the query), the results processing component 216 checks whether there is a tab already for the category (i.e. data set) associated with the result (step 513) and either adds the result to an existing search listing (step 514) or creates a new tab and search listing (step 507), updating the common display area 303 accordingly. These steps are repeated for each of the remaining data sets S2 ... S4, as per decision step 417 shown in Figure 4, and the entire process is repeated for each remaining (in this example 19) combination of alphanumeric characters relating to input key 2 and 7.

As will be appreciated from the foregoing, tabs 303 ... 311 are created dynamically, in real time, as search results are received. As the search query becomes more and more focussed, it is likely that the number of results relevant to the query will decrease. Accordingly, once input has been received from a second and further keypad input(s) and the search results are updated, the results processing component 216 can delete previously created tabs 303 ... 311 (thus this also occurs in real time). This feature is embodied by decision step 519 shown in Figure 5: if no results are returned for a given category by the time another key is pressed (captured at step 515), the results processing component 216 deletes the tab corresponding to that category (step 521). Figure 3c clearly illustrates this feature of the invention: by the time a third keypad has been pressed (number 6), the number of search results corresponding to a combination of individual characters from {2, a, b, c} and {7, p, q, r, s} and {6, m, n, o} has reduced considerably, as has the number of categories within which these search results are held.

### Additional Details and Modifications

The above embodiment relates to performing queries on data sets, each of which is typically associated with a different application. However, the method could be applied in respect of sets of data within one such application, such as an e-mail application, where e-mails are stored in different folders (inbox, sent items, deleted items etc.). In such a scenario, the data sets S1 ... S4 to be searched would be the e-mail folders and the common display area 303 could display tabs corresponding to a given e-mail folder, so that e-mails satisfying the search criteria could be filtered per folder and easily accessible by the user.

The above embodiment works on ambiguous queries that are built up on an individual character basis, and is thus a convenient compromise between requiring the user to know and input the search query exactly and presenting the user with a manageable list of data within which the user can locate the search query. However, the invention could alternatively be applied in relation to queries built up several characters at a time, since the feature of dynamically adding and deleting tabs is independent of the nature of the query.

In the event that the search strategy specifies a publicly accessible repository such as the search engine 10 shown in Figure 1, the mobile network 14 could include a proxy (not shown) which is configured to hold the search results and forward a certain number within a certain time frame for processing according to embodiments of the invention. Alternatively the proxy could be configured with search processing component 215, thereby performing the search locally on the search results returned from the search engine 10, and sending the results to the results processing component 216 running on the mobile device 2.

Whilst in the above embodiment step 403 involves sequentially submitting a search request in respect of individual ones from the set of alphanumeric characters corresponding to a given key (e.g. {2, a, b, c}), the query submitted by the search processing component 215 at step 403 could alternatively be for any record starting with any one of the set of characters. Similarly, whilst in the above embodiment search results are processed one at a time, all records from a given data set that satisfy the query could be identified at step 407, so that the output of the search query for one press of the keypad is search results matching the entire set of characters associated with this keypad, together with their respective categories S 1 ... S4.

Whilst in the above embodiment steps 409 and 411 are performed in respect of a single category only, the steps could be repeated for each of the data sets to be searched, so that the output in relation to a query for {2} of the search query for one press of the keypad is search results matching the set of characters associated with this keypad, together with their respective categories S 1 ... S4.

Whilst in the above embodiment each search query is directed to the storage system 225 whenever a user inputs another number into the editable portion 301, the search processing component 215 could alternatively search within previously returned the search results - that is, in relation to the search query corresponding to keyed input 2 - to identify those that match the combination of sets of alphanumeric characters {2, a, b, c} & {7, p, q, r, s}.

Whilst in the above embodiment the output from a search query in respect of a newly entered character is evaluated at step 517 in relation to search results already displayed in the common display region 303, the results processing component 216 could alternatively clear the common display region 303 at step 517 and build up the tabs and search listings from scratch. The output of such an alternative process, namely a modified common display region 303, would of course be identical to the output of the implementation shown in Figure 5, but the way in which the common display area 303 is modified would be different. This alternative implementation - in which the common display area 303 is built from scratch each time a new character is entered by the user - is particularly well suited when the embodiments are processed on a device having limited processing resources. This is due to the fact that such devices are more limited in relation to the number of threads that can be assigned to concurrently search the various databases and handle results returned therefrom. In addition, this implementation would accommodate a broader range of modifications to the search query, such as deleting characters previously indicated as forming part of the query and/or inserting characters between characters already making up the search query. (e.g. say the user typed 2, then 27, then 276, then scrolled back through the search query to insert the number 3 at the start of query and deleted the 7 from the query, the search query would then be 326, necessitating a complete revision of search results and thus tabs.)

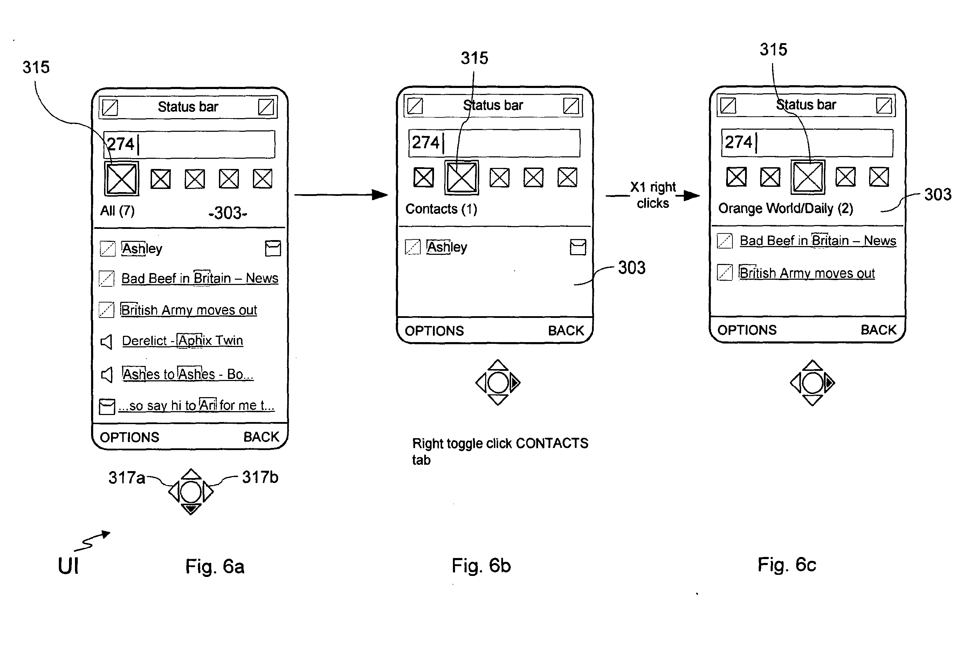

Whilst in Figures 3a - 3c the tabs are shown as icons associated with a given browser page, the tabs could alternatively be embodied as buttons as shown in Figures 6a - 6c, the currently selected tab 315 being displayed more prominently than the others in the common display area 303. As a further alternative, particularly suited for instances where the number of data sets to be searched exceeds five, the row of icons could wrap around the display region, and search listings corresponding to adjacent icons could be reviewed upon selection of the left/right arrows 317a, 317b associated with the display area. As a yet further alternative, the data sets having records matching the search query can be listed as selectable objects in the form of a hyperlink, selection of which causes the search listing corresponding thereto to be displayed in the common display region 303. Each of the non-selected hyperlinks should be accessible from the common display region 303 so as to enable ready selection and display of other search listings matching the search query.

The operating environment 213 shown in Figure 2 can comprise any platform, provided the search processing component and results processing component 215, 216 can communicate with the operating system and cause the user interface to render search results in the manner described above and shown in Figures 3a - 3c and Figures 6a - 6c. For example the operating environment could comprise a Linux platform and a library of Application Programming Interfaces (API), and the search processing component and results processing component 215, 216 can be written in the Python scripting language^{(™)} arranged to communicate with the API. Alternatively the operating environment 213 can be a Symbian^{(™)} operating system, in which case the search processing component and results processing component 215, 216 could be configured to cooperate with the APIs associated with the Symbian^{(™)} operating system. The skilled person will realise that these are just two examples of possible software implementations.

The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of processing search results generated in respect of a search query, the search query being formulated via an input device associated with a terminal, the terminal having a display and being configured with access to a storage system, the storage system holding a plurality of sets of data records, each set of data records being categorised differently to each other set of data records, the method comprising the steps of:
receiving input indicative of a character in a search query to as to formulate an initial search query;
reviewing each of the sets of data records to identify records matching the initial search query;
for a set of data having a record matching the initial search query, creating a selectable object in the display, each selectable object having a display mode associated therewith, said display mode displaying a search results listing comprising matching records in the display; and
appending the matched record to a search results listing corresponding thereto,
in which, in the event that a plurality of sets of data has a record matching the initial search query, the display mode corresponding to a selected selectable object displays the or each unselected selectable object in addition to the search listing corresponding to said selected selectable object.

2. A method according to claim 1, in which, responsive to receipt of a further character in the search query, the method includes:
modifying the initial search query to so as to create a modified search query;
reviewing each of the sets of data records to identify records matching the modified search query;
for a set of data having a record matching the modified search query, creating a selectable object in the display, each selectable object having a display mode associated therewith, said display mode displaying a search results listing comprising matching records in the display;
identifying selectable objects created in respect of the initial search query having no equivalent in the selectable objects created in respect of the modified search query; and
removing, from the display, said identified selectable objects.

3. A method according to claim 1, in which, responsive to receipt of a further character in the search query, the method includes:
identifying previously matching records that no longer match the search query; and
removing, from the display, selectable objects having search results listings with no matching records.

4. A method according to claim 1, in which, responsive to input indicative of modification of the search query, the method includes:
clearing the display of selectable objects therein;
modifying the initial search query to so as to create a modified search query on the basis of the received input;
reviewing each of the sets of data records to identify records matching the modified search query;
for a set of data having a record matching the modified search query, creating a selectable object in the display, each selectable object having a display mode associated therewith, said display mode displaying a search results listing comprising matching records in the display;
appending the matched record to a search results listing corresponding thereto.

5. A method according to any one of the preceding claims, including arranging for the display to have a common display region comprising said selectable objects.

6. A method according to claim 5, in which selection of each display mode displays a different search listing in the common display region.

7. A method according to any one of the preceding claims, in which one of said selectable objects has a display mode displaying search results listings corresponding to all sets of data having a record matching the search query.

8. A method according to any one of the preceding claims, including retrieving an image associated with a given selectable object and configuring the selectable object so as to display the retrieved image.

9. A method according to any one of the preceding claims, including displaying the selectable objects as a row of selectable objects in the common display area.

10. A method according to any one of claim 1 to claim 8, including displaying the selectable objects as a column of selectable objects on the display.

11. A method according to any one of the preceding claims, including:
identifying a set of characters corresponding to said received input;
formulating a plurality of initial search queries, each corresponding to a character of the set; and
performing said review of the sets of data records in respect of each initial query.

12. A method according to claim 11, in which, for each subsequently received input, the method comprises combining characters from individual sets, whereby to formulate a plurality of modified search queries, and performing said review of the sets of data records in respect of each said modified search query.

13. A method according to claim 11 or claim 12, in which the input is received from a key pad of a mobile terminal.

14. A method according to any one of the preceding claims, in which each set of data is searched sequentially, whereby to identify records matching the search query.

15. A terminal for processing search results generated in respect of a search query, the terminal being configured with access to a storage system holding a plurality of sets of data records, the terminal comprising:
a display having a common display area;
an input device for receiving a character in a search query;
a processing system responsive to receipt of said character so as to formulate an initial search query and submit same to said storage system;
wherein the storage system is arranged to review each of the sets of data records to identify records matching the initial search query, the processing system being arranged to create a selectable object in the common display area corresponding to each set of data having a record matching the initial search query and to append the matched record to a search results listing corresponding thereto,
the terminal being arranged in use such that responsive to selection of a created selectable object the search listing corresponding thereto is rendered in the common display area,
wherein in the event that a plurality of sets of data has a record matching the initial search query, the display is arranged to display the or each unselected selectable object in addition to displaying said search listing corresponding to the selected selectable object.

16. A terminal according to claim 15, in which, responsive to receipt of a further character in the search query, the processing system is arranged to modify the initial search query so as to create a modified search query and the storage system is arranged to review each of the sets of data records to identify records matching the modified search query,
wherein, for a set of data having a record matching the modified search query, the processing system is arranged to create a selectable object in the display, each selectable object having a display mode associated therewith, said display mode displaying a search results listing comprising matching records in the display, the processing system being arranged to identify selectable objects created in respect of the initial search query having no equivalent in the selectable objects created in respect of the modified search query, and to remove, from the display, said identified selectable objects.

17. A terminal according to claim 15, in which, responsive to receipt of a further character in the search query, the processing system is arranged to modify the initial search query so as to create a modified search query and the storage system is arranged to review each of the sets of data records to identify records matching the modified search query,
wherein the processing system is arranged to identify previously matching records that no longer match the search query, and to remove, from the display, selectable objects having search results listings with no matching records.

18. A terminal according to claim 15, in which, responsive to receipt of a further character in the search query, the processing system is arranged to modify the initial search query so as to create a modified search query and the storage system is arranged to review each of the sets of data records to identify records matching the modified search query,
wherein the processing system is arranged to clear the display of selectable objects therein, and, for each set of data having a record matching the modified search query, the processing system is arranged to create a said selectable object in the display and to append the matched record to a search results listing corresponding thereto.
